**Europäisches Patentamt**

**European Patent Office**

**Office européen des brevets**

(19)

(11) Veröffentlichungsnummer: **0 141 919**
**B1**

(12)

# EUROPÄISCHE PATENTSCHRIFT

(45) Veröffentlichungstag der Patentschrift:
**19.11.87**

(21) Anmeldenummer: **84109249.7**

(22) Anmeldetag: **03.08.84**

(51) Int. Cl.⁴: **G 21 C 19/30**

(54) **Kühlfalle zur Reinigung von Flüssigkeiten.**

(30) Priorität: **16.08.83 DE 3329579**

(43) Veröffentlichungstag der Anmeldung:
**22.05.85 Patentblatt 85/21**

(45) Bekanntmachung des Hinweises auf die Patenterteilung:
**19.11.87 Patentblatt 87/47**

(84) Benannte Vertragsstaaten:
**BE DE FR GB IT NL**

(56) Entgegenhaltungen:
**EP - A - 0 012 074**
**FR - A - 2 070 919**
**NL - A - 7 101 724**
**US - A - 2 815 277**
**US - A - 3 831 912**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Jansing, Walter, Dipl.-Ing., Diakonissenweg 26, D-5060 Bergisch Gladbach 1 (DE)**
Erfinder: **Teubner, Herbert, Dipl.-Ing., Hagen 14, D-5063 Overath (DE)**

(74) Vertreter: **Mehl, Ernst, Dipl.-Ing. et al, Postfach 22 01 76, D-8000 München 22 (DE)**

## Beschreibung

Die vorliegende Erfindung betrifft eine Kühlfalle nach dem Oberbegriff des ersten Anspruchs. Eine derartige Kühlfalle, die zur Reinigung des im Kühlkreislauf eines schnellen Brutreaktors umgewälzten Natriums dient, ist aus der US-A-3 831 912 bekannt. Bei dieser ist in einem etwa topfförmigen Behälter eine ringförmige Zone vorgesehen, in der netzartige Gebilde angeordnet sind, an denen sich die bei Temperaturerniedrigung aus dem Natrium ausgefällten Verunreinigungen wie Natriumhydrid, Natriumhydroxid und Natriumoxid absetzen sollen. Statt netzartiger Gebilde sind für diesen Zweck auch andere Arten von Abscheidekörpern, z.B. sogenannte Pallringe verwendet worden; die Art dieser Abscheidekörper ist jedoch im Zusammenhang mit der vorliegenden Erfindung unerheblich. Zur Vermeidung von Wärmeverlusten schlägt die genannte Druckschrift vor, das von oben nach unten durch die Abscheidekörper geströmte, dabei abgekühlte und gereinigte Natrium in einem zentralen Rohr wieder nach oben zu führen, um so im Wege des allgemein bekannten Rekuperativ-Wärmetausches einerseits die in der Kühlfalle aufzubringende Kühlleistung und andererseits die für das Wiedererhitzen des Natriums auf die Betriebstemperatur notwendige Heizleistung zu begrenzen. Die durch ein einfaches, zylindrisches Rohr zur Verfügung gestellte Wärmetauschfläche ist jedoch so gering, dass in anderen bekanntgewordenen Konstruktionen, für die hier als exemplarisch die in der NL-A-7 101 724 beschriebene genannt sei ein zur Vergröserung der Wärmetauschfläche in konventioneller Weise wendelförmig gestalteter Rekuperativ-Wärmetauscher verwendet wird. Dieser wird oberhalb des eigentlichen Abscheidebereiches und zusammen mit diesem in einem gemeinsamen Behälter untergebracht, wobei er einen bedeutenden Raum einnimmt. Die bei Kühlfallen nach längerem Gebrauch drohende Verstopfung durch die abgeschiedenen Verunreinigungen wird behoben, indem saubere, heisse Flüssigkeit über die Abscheidekörper geleitet wird, wodurch die Verunreinigungen erneut geschmolzen und ausgewaschen werden können. Aus der EP-B-0 012 074 ist es auch bekannt, den zur endgültigen Aufnahme der Verunreinigungen vorzusehenden Absatzbehälter ständig über eine Rohrleitung mit der Kühlfalle zu verbinden und das die Rohrleitung absperrende Ventil nur während des Spülvorganges zu öffnen und danach wieder zu schliessen.

Aufgabe der vorliegenden Erfindung ist eine Verbesserung an Kühlfallen der beschriebenen Art dahingehend, dass der Rekuperativ-Wärmetauscher bei Bereitstellung einer ausreichenden Wärmetauschfläche im Inneren des ringförmigen, mit Abscheidekörpern gefüllten Raumes angeordnet wird, wobei sich eine erheblich kompaktere Bauweise und damit bedeutende Einsparungen an Isolation, Begleitheizung bzw. -Kühlung usw. erzielen lassen. Eine Regeneration der Kühlfalle, d.h. das Auswaschen der darin abgesetzten Verunreinigungen soll möglich sein, ohne dass dazu besonders ausfallgefährdete Ventile usw. bedient werden müssten. Während der für die Regeneration erforderlichen Zeitspanne soll dem Kühlfallensystem eine zur Aufrechterhaltung des Kreislaufes ausreichende Menge an sauberer Flüssigkeit entnommen werden können.

Die Lösung dieser Aufgabe geschieht durch die im kennzeichnenden Teil des ersten Anspruchs angegebenen Mittel. Durch die Anordnung einer Strömungsschürze wird es möglich, Rekuperativ-Wärmetauscher und den eigentlichen Kühlfallenbereich strömungstechnisch hintereinander zu schalten, so dass in beiden Bereichen jeweils relativ heisse Flüssigkeit sich abkühlend nach unten strömt und im Wärmetauscher die abgekühlte Flüssigkeit sich aufsteigend wieder erwärmt und trotzdem eine kompakte Bauweise zu nutzen, die erhebliche Einsparungen an Rohrleitungen und gegebenenfalls auch an Isolierungen sowie an Heiz- und Kühleinrichtungen ermöglicht. Lediglich zwischen Strömungsschürze und dem ringförmigen Behälter wird die Strömung gegen das natürliche, durch die Temperaturunterschiede hervorgerufene Gefälle umgekehrt.

In weiterer Ausgestaltung der Erfindung wird vorgeschlagen, dass die Strömungsschürze wärmedämmend ausgeführt ist. Dies kann durch Aufbringen von Isoliermaterial geschehen, aber auch dadurch, dass die Strömungsschürze doppelt mit dazwischenliegendem Luftspalt ausgeführt ist. Dadurch wird ein unerwünschter Temperaturaustausch zwischen dem Rekuperativ-Wärmetauscher und den Abscheidekörpern herabgesetzt.

Für eine Kühlfalle, die mit einem Setzbehälter für aus ihr ausgewaschene Verunreinigungen verbindbar ist, wird die im dritten Anspruch bezeichnete Ausgestaltung der Erfindung vorgeschlagen. Es wird eine Armatur eingespart, die besonders ausfallgefährdet ist, da bei Regenerationsbetrieb durch sie hindurch eine stark verschmutzte Flüssiget geführt werden muss. Zweckmässigerweise ist der Querschnitt der Verbindung zwischen Kühlfalle und Setzbehälter im Verhältnis zum Gesamtquerschnitt nur gering.

Die Ausgestaltung der Erfindung gemäss dem kennzeichnenden Teil des Anspruchs 4 sorgt dafür, dass sich im Setzbehälter eher eine Temperaturschichtung einstellt, die den Setzvorgang beschleunigt und auch dafür sorgt, dass die Schichten sauberen und verschmutzten Fluids gut voneinander getrennt bleiben. Erstere bilden dann ein Reservoir, aus dem der Kreislauf während des Regenerationsbetriebes gespeist werden kann.

Dieser Pufferfunktion dient die im fünften Anspruch vorgeschlagene Ausgestaltung der Erfindung.

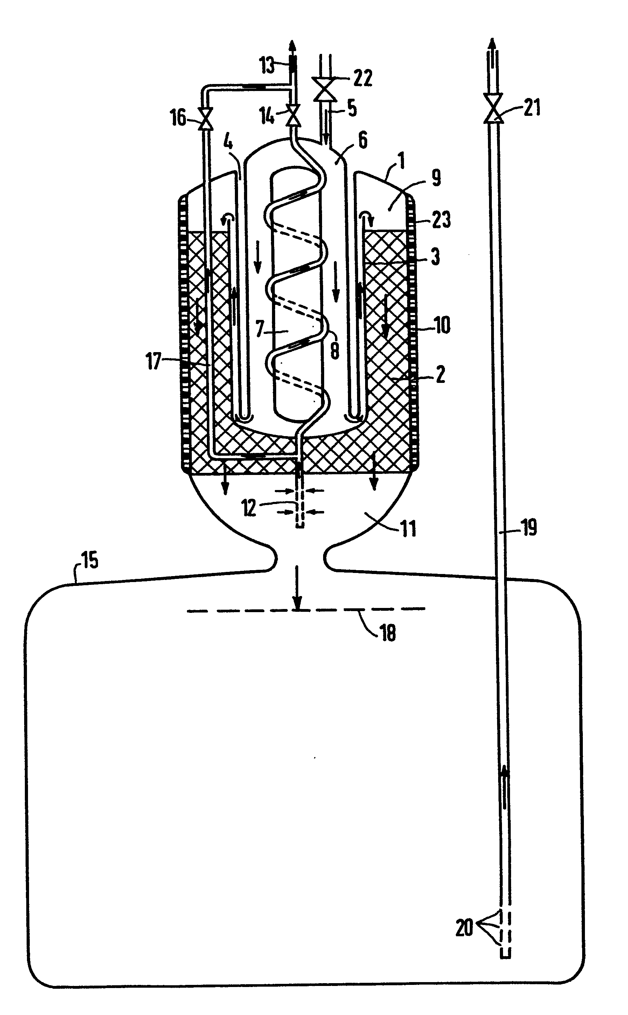

Ein Ausführungsbeispiel der Erfindung ist in der Zeichnung dargestellt und zwar zeigt diese einen schematischen Längsaxialschnitt.

Die Kühlfalle besteht aus einem den Flüssigkeitseinschluss bewirkenden Aussenbehälter 1, in dem ein mit Abscheidekörpern, z.B. mit Pallringen 2 gefüllter Innenbehälter 3 angeordnet ist; die Aussenwand des Innenbehälters 3 wird dabei durch die Wand des Aussenbehälters 1 gebildet. Durch einen ringförmig umlaufenden Spalt 4 wird eine Strömungsschürze geschaffen, die den radialen Bereich des Behälters 1 strömungsmässig abteilt. Die zu reinigende Flüssigkeit strömt über eine von dem hier nicht gezeigten Hauptkreislauf der Flüssigkeit abzweigende Zuflussleitung 5 in den Innenbereich 6 des Behälters 1, der einen Verdrängungskörper 7 und ein gewendeltes Wärmetauschrohr 8 enthält. Am unteren Rande des Innenbereichs 6 wird die Strömung der Flüssigkeit durch die Innenwand des Behälters 3 nach oben umgelenkt. Am oberen Ende eines ringförmigen Bereichs 9 des Behälters 1 strömt die Flüssigkeit erneut nach unten, wobei sie sich weiter abkühlt. Diese Abkühlung wird durch das Vorhandensein von Kühlrippen 10 auf der Oberfläche des Behälters 1 unterstützt; sollte deren Wirkung nicht ausreichen, um die Flüssigkeit soweit abzukühlen, dass die in ihr gelösten Verunreinigungen ausgefällt werden, so kann die Kühlwirkung mit Hilfe hier nicht gezeigter Gebläse erhöht werden. Nachdem sich die Verunreinigungen abgeschieden haben, tritt die Flüssigkeit in einen unteren Bereich 11 des Behälters ein, von wo aus sie über Öffnungen 12 in den bis hierher reichenden Stutzen der Leitung 8 eintritt. Über eine Abfuhrleitung 13, die mittels eines Ventils 14 absperrbar ist, wird die gereinigte und während des Aufstieges durch den inneren Bereich 6 wieder erwärmte Flüssigkeit dem Hauptkreislauf wieder zugeführt. Liegt die sogenannte Plugging-Temperatur, bei der die Verunreinigungen ausgefällt werden, wegen eines vorübergehend erhöhten Gehaltes an denselben höher als normal (etwa 130°C), so kann das Ventil 14 geschlossen und ein weiteres, eine Umgehungsleitung 17 absperrendes Ventil 16 geöffnet werden; diese umgeht den Rekuperativ-Wärmetauscher und die eintretende Flüssigkeit wird weniger stark abgekühlt, so dass sie auf einem höheren emperaturniveau (z.B. etwa 190°C) in den Bereich der Abscheidekörper 2 eintritt und ein unerwünschtes vorzeitiges Ausfällen, etwa im Wärmetauscher verhindert wird. Der Behälter 1 steht an seinem unteren Ende über eine Einschnürung mit einem im Verhältnis zu ihm sehr viel grösseren Setzbehälter 15 in Verbindung. Im Normalbetrieb findet kaum ein Austausch zwischen den beiden Behältern statt, da die Temperaturschichtung zwischen der relativ warmen Flüssigkeit im Bereich 11 und der abgekühlten Flüssigkeit im Setzbehälter 15 dies verhindert. Sind die Abscheidekörper 2 durch längeren Gebrauch stark mit den ausgefällten Stoffen verunreinigt und ist die Kühlfalle damit nicht mehr betriebsbereit, kann sie regeneriert werden, indem durch das Schliessen eines weiteren Ventils 22 der Zufluss unterbrochen wird. Mit Hilfe einer (meist ohnehin vorhandenen Begleitheizung 23 kann die Kühlfalle dann auf eine höhere Temperatur (z.B. etwa 400°C) gebracht und eine gewisse Zeit gehalten werden, wodurch z.B. nur schwer lösliches Natriumhydroxid in leichter lösliches Natriumhydrid und Natriumoxid aufgespalten wird. Anschliessend wird das Ventil 22 erneut geöffnet und die Kühlfalle mit heisser Flüssigkeit durchspült, wobei die Verunreinigungen von den Abscheidekörpern 2 entfernt und in den Setzbehälter 15 gespült werden. Bei der hier (auch durch den Kontakt mit der relativ kühlen Flüssigkeit im Setzbehälter 15) stattfindenden Abkühlung werden die Verunreinigungen erneut ausgefällt. Der grosse Querschnitt des Setzbehälters 15 und eine Beruhigungsplatte 18 sorgen dafür, dass keine nachhaltige Verwirbelung, sondern eine Temperaturschichtung auftritt, die verhindert, dass die ausgefällten Stoffe zu schnell auf den Boden des Setzbehälters 15 sinken. Es ist daher möglich, über eine weitere, bis in den Bodenbereich des Setzbehälters 15 reichende Leitung 19 die zur Zurückhaltung von Verunreinigungen ebenfalls mit Bohrungen 20 versehen ist, saubere Flüssigkeit abzuziehen, während der Regenerationsprozess noch in Gang ist. Die ebenfalls in den Hauptkreislauf zurückführende Leitung 19 ist mit einem weiteren Ventil 21 absperrbar.

### Patentansprüche

1. Kühlfalle zur Reinigung von Flüssigkeiten von in gelöstem Zustand mitgeführten, durch Temperaturerniedrigung ausfällbaren Verunreinigungen mit einem etwa ringförmigen, mit Abscheidekörpern (2) gefüllten, mit Ein- (5) und Auslass (13) für die Flüssigkeit versehenen Innenbehälter (3), wobei der ringförmige Innenbehälter in einem ihn umschliessenden Aussenbehälter (1) enthalten ist, in dem ein Rekuperativ-Wärmetauscher (6, 8) angeordnet ist, dadurch gekennzeichnet, dass der Rekuperativ-Wärmetauscher (6, 8) im Inneren des Innenbehälters (3) gelegen, und zwischen beiden eine Strömungsschürze (4) angeordnet ist.

2. Kühlfalle nach Anspruch 1, dadurch gekennzeichnet, dass die Strömungsschürze (4) wärmedämmend ausgeführt ist.

3. Kühlfalle nach Anspruch 1, wobei die Kühlfalle mit einem Setzbehälter (15) für aus ihr ausgewaschene Verunreinigungen verbindbar ist, dadurch gekennzeichnet, dass Kühlfalle und Setzbehälter (15) im Betrieb eine bauliche Einheit bilden und ständig miteinander in Verbindung stehen.

4. Kühlfalle nach Anspruch 3, dadurch gekennzeichnet, dass der Inhalt des Setzbehälters (15) mindestens das Doppelte desjenigen des Aussenbehälters (1) beträgt.

5. Kühlfalle nach Anspruch 3 oder 4, dadurch gekennzeichnet, dass der Setzbehälter (15) mit einer Abzugsvorrichtung (19, 20) zur Flüssigkeit versehen ist, die bei geschlossenem Auslass (14) des mit Abscheidekörpern (2) gefüllten Behälters (3) öffenbar ist.

### Claims

1. A cold trap for cleaning liquids of impurities which they carry in the liquid state and which can be precipitated by a reduction in temperature, comprising an approximately ring-shaped inner container (3) which is filled with precipitating elements (2) and has an inlet (5) and outlet (13) for the liquid, where the ring-shaped inner container is contained in a surrounding outer container (1) in which a recuperative heat exchanger (6, 8) is arranged, characterised in that the recuperative heat exchanger (6, 8) is located inside the inner container (3), and a flow skirt (4) is arranged between the two.

2. A cold trap as claimed in claim 1, characterised in that the flow skirt (4) has a heat-insulating effect.

3. A cold trap as claimed in claim 1, wherein the cold trap can be connected to a settling container (15) for impurities washed out therefrom, characterised in that the cold trap and the settling container (15) in operation form one structural unit and are permanently connected to one another.

4. A cold trap as claimed in claim 3, characterised in that the volume of the selling container (15) amounts to at least double that of the outer container (1).

5. A cold trap as claimed in claim 3 or 4, characterised in that the settling container (15) is provided with a discharge device (19, 20) for liquid, which can be opened when the outlet (14) of the container (3), filled with precipitating elements (2), is closed.

**Revendications**

1. Piège froid pour débarrasser des liquids d'impuretés entraînées à l'état dissous et susceptibles de précipiter par un abaissement de température, comprenant une cuve intérieure (3) de forme sensiblement annulaire, emplie de corps de séparation (2) et munie d'une entrée (5) et d'une sortie (13) pour le liquide, la cuve intérieure de forme annulaire étant contenue dans une cuve extérieure (1) qui l'entoure et dans laquelle est disposé un échangeur de chaleur à récupération (6, 8), caractérisé en ce que l'échangeur à récupération (6, 8) est placé à l'intérieur de la cuve intérieure (3) et entre les deux est interposé un tablier (4) empêchant tout écoulement.

2. Piège froid suivant la revendication 1, caractérisé en ce que le tablier (4) empêchant tout écoulement est calorifugé.

3. Piège froid suivant la revendication 1, dans lequel le piège froid peut communiquer avec une cuve de décantation (15) pour des impuretés qui en sont enlevées par lavage, caractérisé en ce que le piège froid et la cuve de décantation (15) forment en fonctionnement une unité du point de vue de la construction et communiquent constamment l'une avec l'autre.

4. Piège froid suivant la revendication 3, caractérisé en ce que la capacité de la cuve de décantation (15) représente au moins le double de celle de la cuve extérieure (1).

5. Piège froid suivant la revendication 3 ou 4, caractérisé en ce que la cuve de décantation (15) est munie d'un dispositif de soutirage (19, 20) du liquide qui peut être ouvert lorsque la sortie (14) de la cuve (3) emplie de corps de séparation (2) est fermée.